# EUROPEAN PATENT APPLICATION

(11) **EP 1 930 918 A2**
(43) Date of publication of application: **11.06.2008**
(21) Application number: 07254710.2
(22) Date of filing: 05.12.2007
(51) Int. Cl.: H01F 27/30, H01F 41/06, F02C 6/12

(54) **Coil structure for motor, method of forming the same, and turbo charger for internal combustion engine**

(30) Priority: 06.12.2006 JP 2006329293
(71) Applicant: Toyota Jidosha Kabushiki Kaisha, Toyota-shi, Aichi-ken 471-8571 (JP)
(72) Inventor: Maeda, Tomoyuki, Toyota-shi Aichi-ken 471-8571 (JP)
(74) Representative: Harris, Ian Richard

(57) **Abstract**

A coil structure formed by winding a wire bundle (4) composed of a plurality of thin wires around a stator core (2). The stator core (2) has axial grooves (5a, 5b) that extend in an axial direction of the motor and core ends (6a, 6b) that extend across the axial direction. The wire bundle (4) has twisted-wire portions on the axial grooves (5a, 5b), and straight-wire portions on the core ends (6a, 6b). Thus, the wire bundle 4 has alternating twisted-wire bundle and straight-wire portions at positions corresponding in length to axial-groove portions (4a) and coil end portions (4b). Accordingly, the height of coil end portions is lower, which reduces the axial length of the motor as well as the eddy current loss.

## Description

### BACKGROUND OF THE INVENTION

### 1. Field of Invention

The present invention relates to a structure of a coil wound around the core of a motor, and a method of forming the coil structure. The present invention also relates to a turbo charger for an internal combustion engine, which has the motor with the coil structure.

### 2. Description of Related Art

As one technology of this type, the electrical coil and method of winding the electrical coil described in Japanese Patent Application Publication No. 2003-168618 (JP-A-2003-168618) below are conventionally known. In this winding method, a Litz wire (twisted wire) is wound under constant tension while a coil mold is rotated to prevent the winding from bulging out. An electrical coil produced as above may be used in a motor rotor. The Litz wire (twisted wire) is indispensable to reduce the eddy current loss, which is generated in the winding of the electrical coil when the motor is rotated at an ultrahigh speed.

According to the winding method described in JP-A-2003-168618, the Litz wire (twisted wire) is used to reduce the eddy current loss. However, because the Litz wire (twisted wire) has high bending rigidity, the coil end portions of the winding tend to bulge out and the axial length of the coil is increased as a result of the bulging. Thus, the axial length of the rotor increases, and the problem of resonant vibration may occur when the motor is rotated at an ultrahigh speed.

### SUMMARY OF THE INVENTION

The present invention provides a coil structure for a motor that reduces the height of coil end portions to reduce the axial length of the motor with the eddy current loss reduction effect maintained, and a method of forming the coil structure. The present invention also provides a turbo charger for an internal combustion engine, which has the motor with the coil structure.

A first aspect of the present invention provides a coil structure for a motor that includes a coil formed by winding a wire bundle composed of a plurality of wires around a core, the core having axial grooves that extend in the axial direction of the motor and core ends that extend across the axial direction, in which the portions of the wire bundle which are wound on the axial grooves are twisted and the portions of the wire bundle which are wound on the core ends are straight.

According to the constitution of the first aspect of the present invention, the wire bundle has twisted-wire portions running through the axial grooves, and straight-wire portions running over the core ends. Because the twisted-wire portions of the wire bundle are wound on the axial grooves, the eddy current loss in the wire bundle is smaller than if straight-wire portions of the wire bundle were wound on axial grooves. Also, straight-wire portions of the wire bundle, which are less rigid than the twisted-wire portions, are wound over the core ends, bulging of the wire bundle thereon is reduced. That is, because the height of the portions of the wire bundle that are wound on the core end is reduced and the eddy current loss reduction is maintained, the axial length of the motor may be decreased.

In the first aspect, the wire bundle may have alternately the twisted-wire portions and the straight-wire portions that are formed in advance and that correspond in length to the axial groove and the coil end, respectively.

According to the constitution of the first aspect, because the wire bundle has alternately the twisted-wire portions and the straight-wire portions that are formed in advance and that correspond in length to the axial groove and the coil end, respectively. Therefore, there is no need to twist the wire bundle when the wire bundle is wound around the core, and the steps and facilities necessary for it may be omitted. In other words, the steps and facilities for winding the wire bundle can be simplified.

A method of forming a coil structure for a motor having a coil formed by winding a wire bundle composed of a plurality of wires around a core, the core having axial grooves that extend in an axial direction of the motor and core ends that extend across the axial direction according to a second aspect of the present invention, includes: bundling a plurality of wires to form a wire bundle, clamping a plurality of portions of the wire bundle with a plurality of clamps, wherein the plurality of clamped portions correspond to the core ends, twisting the portions of the wire bundle that are not clamped by rotating the clamps, wherein the portions that are twisted correspond to the axial grooves, applying an adhesive to the twisted portions, and removing the clamps and winding the resulting wire bundle having alternating twisted-wire portions and straight wire portions around the core of the motor in a plurality of layers. The number of times the clamps may be rotated is equal to an integral multiple of 1/2 in the twisting step.

According to the constitution of the second aspect of the present invention, the wire bundle has twisted-wire portions running through the axial grooves, and straight-wire portions running over the core ends. Because the twisted-wire portions of the wire bundle are wound on the axial grooves, the eddy current loss in the wire bundle is smaller than if straight-wire portions of the wire bundle were wound on axial grooves. Also, straight-wire portions of the wire bundle, which are less rigid than the twisted-wire portions, are wound over the core ends, bulging of the wire bundle thereon is reduced. That is, because the height of the portions of the wire bundle that are wound on the core end is reduced and the eddy current loss reduction is maintained, the axial length of the motor may be decreased.

A method of forming a coil structure for a motor according to a third aspect of the present invention includes: supplying a wire bundle composed of a plurality of parallel wires to a rotary member, rotating the rotary member in the forward direction to twist portions of the wire bundle that are wound on axial grooves that are formed on a stator core and that extend in the axial direction of the motor, rotating the rotary member in the reverse direction to untwist portions of the wire bundle that are wound on core ends that are formed on the stator core and that extend across the axial direction so that the plurality of wires at the portions of the wire bundle that are wound on the core end are straight.

According to the constitution of the third aspect, when the wire bundle is wound around a core, the twisted-wire portions are wound on the axial grooves and the straight-wire portions are wound over the core ends. That is, twisted-wire portions are wound on the axial grooves and straight-wire portions are wound over the core ends may be formed during the process of winding the wire bundle around the core. Therefore, it is not necessary to prepare a wire bundle having twisted-wire portions and straight wire bundle portions in advance.

In the third aspect, the rotary member is rotated m-times the number of rotations necessary to twist portions of the wire bundle that are wound on the core ends from a position at a distance of m-times the length of the axial grooves from the core end when the wire bundle is wound on the axial grooves, and then the rotary member is rotated (m-1) times the number of rotations necessary to twist the axial-groove when the wire bundle is wound on the core.

According to the third aspect, when the rotation means cannot be brought close to the core, the rotation means may be operated at a distance of m-times the length of the axial grooves. Therefore, adjustment of the rotation means is facilitated. In other words, the efficiency in forming the coil structure in the core is improved.

A turbo charger for an internal combustion engine according to a fourth aspect of the present invention includes; a turbine wheel provided in an exhaust pipe connected to an internal combustion engine, a compressor wheel provided in the exhaust pipe, a turbine shaft connecting the turbine wheel and the compressor wheel, a motor for assisting the rotation of the turbine shaft. The motor includes a coil structure according to the first aspect.

According to the forth aspect, the eddy current loss in the motor is small even when it is operated in an ultrahigh speed. In addition, the axial length of the motor can be small, the turbo charger itself can be reduced in axial length and made compact.

### BRIEF DESCRIPTION OF THE DRAWINGS

The foregoing and further features and advantages of the invention will become apparent from the following description of example embodiments with reference to the accompanying drawings, wherein like numerals are used to represent like elements and wherein:
FIG. 1 is an explanatory view illustrating the general configuration of an engine system that includes a turbo charger;
FIG. 2 is a cross-sectional view illustrating a part of a stator, taken along a direction perpendicular to a rotating shaft of a motor;
FIG. 3 is a front view (viewed in the direction of arrow A of FIG. 2) illustrating an inner part of the stator;
FIG. 4 is an explanatory view illustrating a first step of a method of forming a twisted-wire portion of the wire bundle;
FIG. 5 is an explanatory view illustrating a second step of the method of forming a twisted-wire portion of the wire bundle;
FIG. 6 is an explanatory view illustrating a third step of the method of forming a twisted-wire portion of the wire bundle;
FIG. 7 is an explanatory view illustrating a fourth step of the method of forming a twisted-wire portion of the wire bundle;
FIG. 8 is an explanatory view illustrating a fifth step of the method of forming a twisted-wire portion of the wire bundle;
FIG. 9 shows the general configuration, partially broken, of a winding head;
FIG. 10 is a view of a rotary guide viewed in the direction of arrow C of FIG. 9;
FIG. 11 is an explanatory view illustrating a method of winding a wire bundle;
FIG. 12 is an explanatory view illustrating a first step of a method of winding a wire bundle;
FIG. 13 is an explanatory view illustrating a second step of the method of winding a wire bundle;
FIG. 14 is an explanatory view illustrating a third step of the method of winding a wire bundle;
FIG. 15 is an explanatory view illustrating a fourth step of the method of winding a wire bundle;
FIG. 16 is an explanatory view illustrating a fifth step of the method of winding a wire bundle;
FIG. 17 is an explanatory view illustrating a sixth step of the method of winding a wire bundle;
FIG. 18 is an explanatory view illustrating a method of winding a wire bundle;
FIG. 19 is an explanatory view illustrating a first step of a method of winding a wire bundle;
FIG. 20 is an explanatory view illustrating a second step of the method of winding a wire bundle;
FIG. 21 is an explanatory view illustrating a third step of the method of winding a wire bundle;
FIG. 22 is an explanatory view illustrating a fourth step of the method of winding a wire bundle;
FIG. 23 is an explanatory view illustrating a fifth step of the method of winding a wire bundle; and
FIG. 24 is an explanatory view illustrating a sixth step of the method of winding a wire bundle.

### DETAILED DESCRIPTION OF THE PREFERRED EMBODIMENTS

A first embodiment of a coil structure for a motor and a method of forming the coil structure according to the present invention will be described in detail below with reference to the drawings.

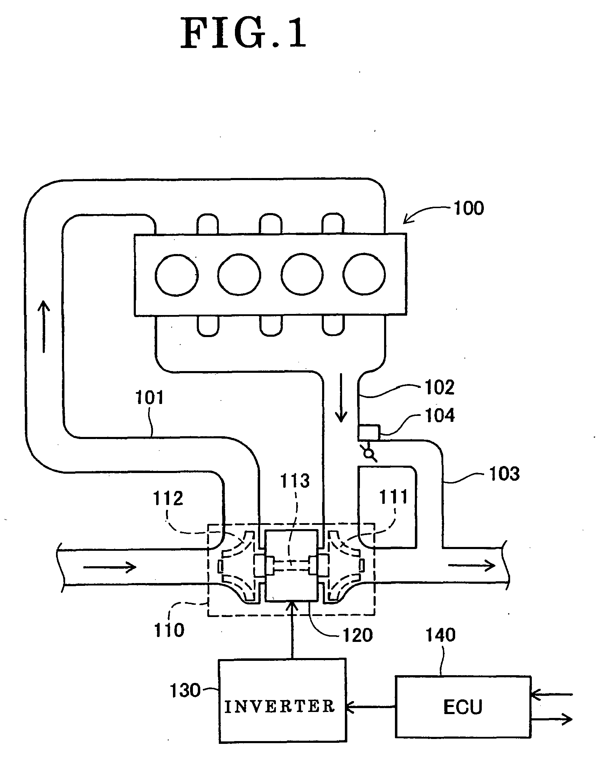

FIG. 1 is an explanatory view illustrating the general configuration of an engine system including a motor-assisted turbo charger (which is hereinafter referred to simply as "turbo charger") 110 in which a high-speed motor (which is hereinafter referred to simply as "motor") 120 of this embodiment is used. The engine system has an engine 100, a turbo charger 110, an inverter 130, and an engine control unit (ECU) 140 that controls the entire engine system.

An intake pipe 101 and an exhaust pipe 102 are connected to the engine 100. The turbo charger 110 is constituted of a turbine wheel 111 provided in the exhaust pipe 102, a compressor wheel 112 provided in the intake pipe 101, a turbine shaft 113 that connects the turbine wheel 111 to the compressor wheel 112, a motor 120 for assisting the rotation of the turbine shaft 113, and so on. Exhaust gas flowing through the exhaust pipe 102 rotates the turbine wheel 111. Then, the compressor wheel 112 is rotated via the turbine shaft 113 and pressurizes the air in the intake pipe 101. In the turbo charger 110, the motor 120 may be used to rotate the turbine shaft 113 at an ultrahigh speed when the energy of the exhaust gas exhausted from the engine 100 is insufficient. The motor 120 is controlled by the ECU 140 via the inverter 130.

The exhaust pipe 102 has a bypass pipe 103 for diverting exhaust gas away from the turbine wheel 111. A wastegate valve 104 is provided in the bypass pipe 103. The valve 104 is opened when forced induction is not necessary.

In this engine system, the motor 120 may be required to rotate at high rotational speeds of around 100,000 revolutions per minute (rpm) or higher, and the motor 120 therefore has a prescribed coil structure in its stator. When the rotor rotates, an eddy current is induced in the coil by leakage flux from magnets in the rotor and causes an eddy current loss. The eddy current loss is proportional to the square of the motor drive frequency. Thus, when the motor drive frequency is increased to increase the rotational speed of the motor 120, the eddy current loss that is generated in the coil significantly increases. In this embodiment, therefore, the coil structure of the motor 120 reduces the eddy current loss. The coil structure of the motor 120 is described below.

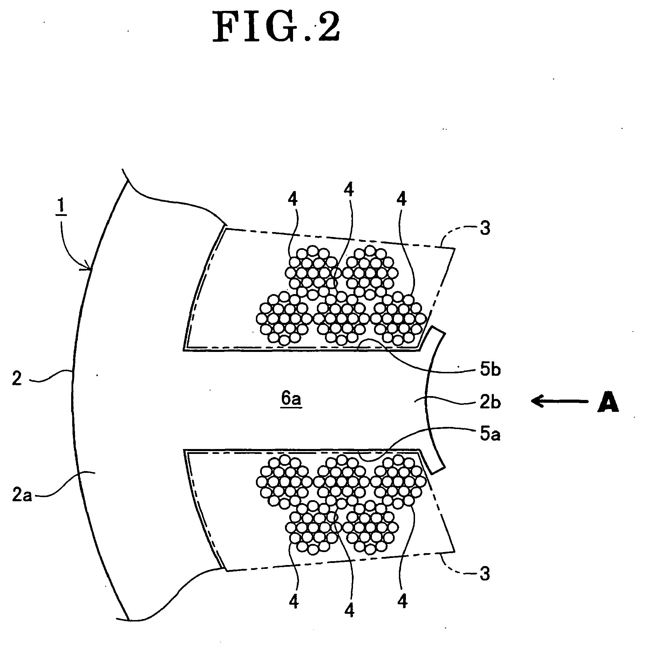

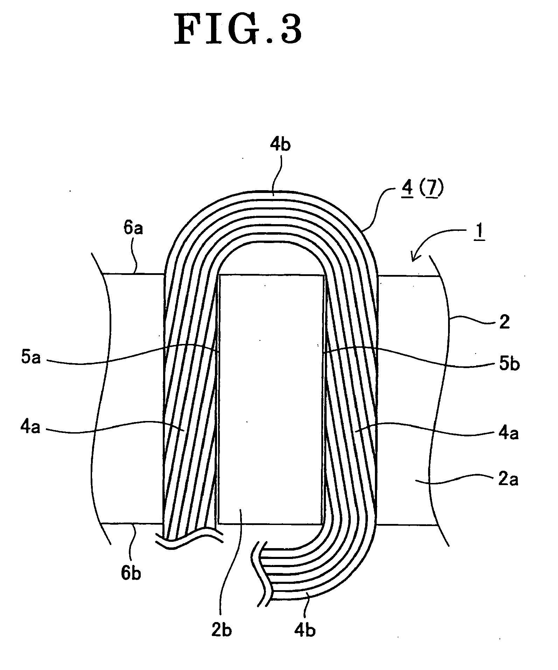

FIGs. 2 and 3 are explanatory views illustrating the coil structure of this embodiment. The motor 120 has a prescribed coil structure in its stator 1. FIG. 2 shows a part of the stator 1, viewed from a direction perpendicular to the rotating shaft of the motor 120. FIG. 3 is a front view (viewed in the direction of arrow A of FIG. 2) illustrating an inner part of the stator 1. The stator 1 includes a stator core 2 and a coil 3. The stator core 2 includes a yoke 2a and a tooth 2b.

The coil 3 is formed by winding a wire bundle 4 composed of a plurality of thin wires around the tooth 2b, which may have having a rectangular cross-section. In the embodiment, the thin wires for the wire bundle 4 are made of copper. In FIG. 2, a plurality of cross-sections of the wire bundle 4 are shown. The stator core 2 includes axial grooves 5a and 5b that extend in the axial direction of the motor 120 (vertical direction of FIG. 3) at both sides of the tooth 2b, and core ends 6a and 6b located on top and bottom of the tooth 2b and that extend across the axial direction. In this embodiment, the wire bundle 4 has twisted-wire portions wound on the axial grooves 5a and 5b and straight-wire portions wound over the core ends 6a and 6b.

In the motor 120 of this embodiment, the motor drive frequency is high and an eddy current loss tends to be generated in every part. Also, an eddy current is generated in the coil 3 by a leakage flux. Thus, in this embodiment, the wire bundle 4 composed of a plurality of thin wires is used as a countermeasure against the eddy current loss having an adverse effect on the work of passing a drive current. In addition, although thick copper wires need to be used to allow a large drive current to flow, the wire bundle 4 composed of a plurality of thin wires is alternatively used in this embodiment for the purpose of decreasing the rigidity of the copper wires to facilitate the winding of the copper wires.

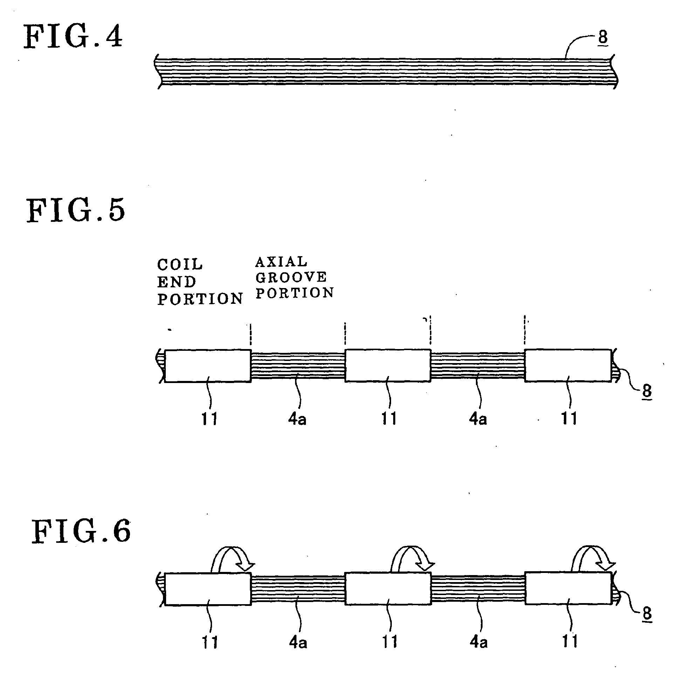

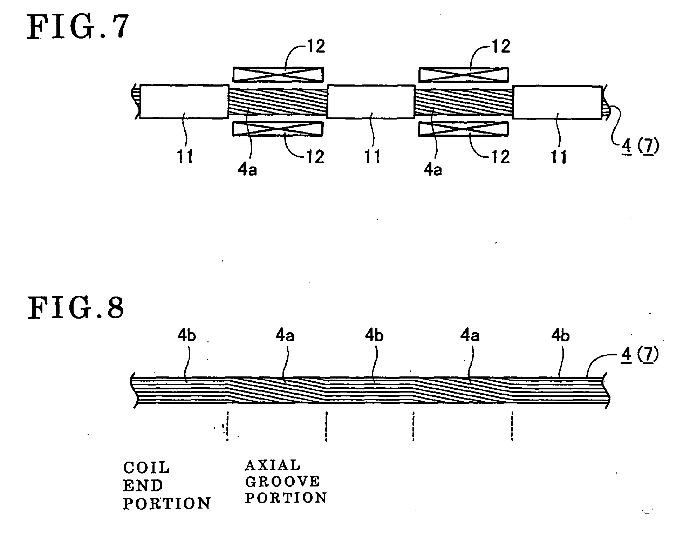

In this embodiment, a twisted wire bundle 7 (see FIG. 8) having alternately twisted-wire portions and straight-wire portions formed in advance and corresponding in length to the axial-groove portions 4a and the coil end portion 4b, respectively, is used as the wire bundle 4 that is wound around the tooth 2b. The steps of the method of forming the twisted wire bundle 7 are described below with reference to explanatory views of FIGs. 4 to 8.

To form the twisted-wire bundle 7, a prescribed length of a straight-wire bundle 8, composed of a plurality of thin wires that run parallel to each other, is initially held straight as shown in FIG. 4. Next, the portions that will form the coil end portions 4b are clamped by a plurality of clamps 11, as shown in FIG. 5. The length of each clamp 11 is equal to that of the coil end portions. The length of the intervals between the plurality of clamps 11 is equal to the length of the axial-groove portions. Then, the clamps 11 are rotated a prescribed number of times to twist the wires in the axial-groove portions 4a as shown in FIG. 6. In this embodiment, an integral multiple of "1/2" may be adopted as the number of rotations of the clamps 11 in order to obtain a necessary number of twists. The reason for adopting the integral multiple of "1/2" as the number of rotations is because that the effect that the direction of the leakage flux applied to the thin wires forming the wire bundle 4 is dispersed in the longitudinal direction of the thin wires and the eddy current is inverted in direction and cancelled can be expected. As a result, the wires in the axial-groove portions 4a of the wire bundle, which were not clamped by the clamps 11, become twisted to form twisted-wire portions. In the next step, the twist of the axial-groove portions 4a are fixed by applying an adhesive or the like as shown in FIG. 7. To do so, an adhesive is applied on the axial-groove portions 4a, and the axial-groove portions 4a are heated by electric heaters 12 or the like as shown in FIG. 7 to deposit the adhesive. Next, the clamps 11 are removed. As a result, the coil end portions 4b, which were clamped by the clamps 11, become straight straight-wire portions and the axial-groove portions 4a, which were not clamped, become twisted-wire portions as shown in FIG. 8. When above steps are repeated along the straight-wire bundle 8, the twisted-wire bundle 7 with a prescribed length having alternately twisted-wire portions and straight- wire portions corresponding in length to the axial groove portions 4a and the coil end portions 4b, respectively, are formed. Here, when the twisted wire bundle 7 is wound around the tooth 2b of the stator core 2 in a plurality of layers, because the lengths of the axial-groove portions 4a and the coil end portions 4b need to be longer toward outside, the lengths of the axial-groove portions 4a and the coil end portions 4b need to be appropriately adjusted.

The twisted wire bundle 7 formed as described above is wound around the tooth 2b such that the axial-groove portions 4a and the coil end portions 4b are located on the axial grooves 5a and 5b and the core ends 6a and 6b, respectively, as shown in FIGs. 2 and 3. As a result, a stator 1 having the coil structure of this embodiment in the coil 3 is obtained. The motor 120 is produced by inserting a rotor into the central hole of the stator 1.

According to the coil structure of a motor of this embodiment described above, the twisted-wire portions (the axial-groove portions 4a) and the straight-wire portion (the coil end portions 4b) of the wire bundle 4 are wound on the axial grooves 5a and 5b and the core ends 6a and 6b, respectively, of the stator core 2. Here, because the twisted-wire portions of the wire bundle 4(7) are wound on the axial grooves 5a and 5b, which are likely to be influenced by a leakage flux, the eddy current loss in the parts of the wire bundle 4(7) on the axial grooves is smaller than that in the straight-wire portions of the wire bundle. More specifically, because the direction of the leakage flux applied from the magnet of the rotor to the thin wires in the twisted-wire portions 4a is dispersed in the longitudinal direction of the thin wires, the eddy current loss is smaller than that in the straight-wire portions 4b at the core ends. On the other hand, because the straight-wire portions of the wire bundle, which are more pliable (less in rigidity) than the twisted-wire portions of the wire bundle, are wound on the core ends 6a and 6b, at which the amount of leakage flux is smaller, bulging of the wire bundle 4(7) thereon is reduced. As a result, in the motor 120, in which the stator 1 as described above is incorporated, the height of the coil end portions 4b may be reduced with the eddy current loss reduction effect of the twisted-wire portions maintained, and the axial length of the motor 120 may be decreased. Therefore, the motor 120 can be made more compact, and the problem of resonant vibration is less likely to occur even when the motor 120 is rotated at an ultrahigh speed.

Because the turbo charger 110 of this embodiment uses the motor 120 having the above coil structure, the eddy current loss in the motor 120 is small even when it is operated in an ultrahigh speed. In addition, the axial length of the motor 120 can be small, the turbo charger 110 itself can be reduced in axial length and made compact.

Also, in this embodiment, the twisted wire bundle 7 having alternating twisted-wire portions and straight-wire portions formed in advance and corresponding in length to the axial-groove portions 4a and the coil end portions 4b, respectively, is used as the wire bundle 4. Therefore, there is no need to impart twists to the wire bundle 4(7) when the wire bundle 4(7) is wound around the stator core 2, and the steps and facilities necessary to impart twists may be omitted. As a result, the steps and facilities for winding the wire bundle 4(7) necessary to obtain the effects of the motor 120 can be simplified.

A second embodiment of the invention, drawn to a method of forming the coil structure of a motor according will be described below with reference to drawings.

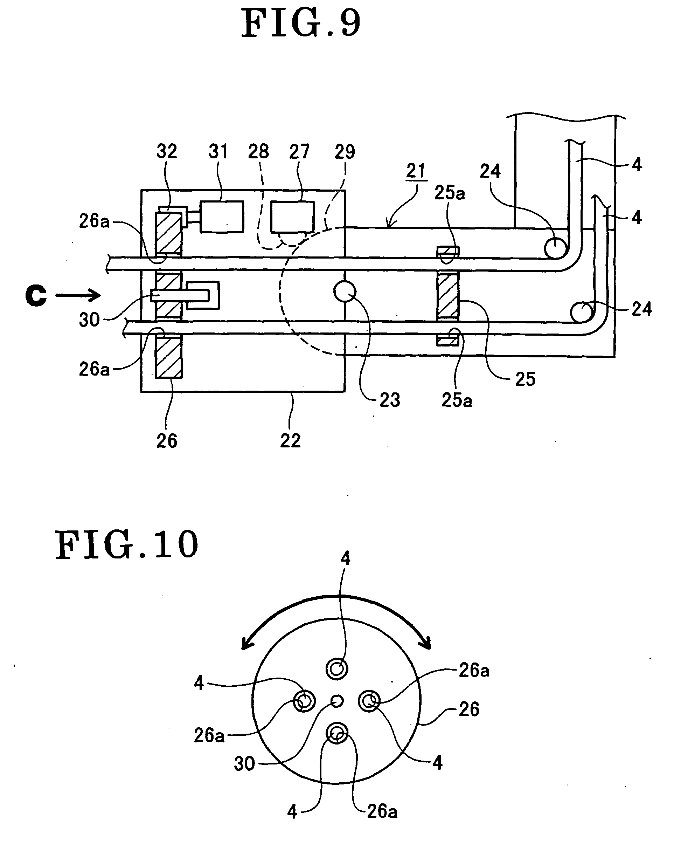

This embodiment differs from the first embodiment in that twists are imparted to the wire bundle as the wire bundle is wound around the stator core. Therefore, a coil winder having a twisting function is used in this embodiment. FIG. 9 shows the general configuration, partially broken, of a winding head 21 of the coil winder.

The winding head 21 is attached to a prescribed movable arm, and is configured to operate in the central hole of the stator core 2. The winding head 21 is moved forward, backward, sideways, upward and downward by the movable arm to wind the wire bundle 4 around the stator core 2. The winding head 21 has an L-shaped configuration, and an operation frame 22 is provided at an end of the winding head 21 for rotation about a pivot shaft 23. A plurality of wire bundles 4 are guided in parallel to each other in the winding head 21 by a plurality of guides 24, 25 and 26. First guides 24 are located where the winding head 21 is bent and change the direction in which the wire bundles 4 are directed. A second guide 25 has holes 25a for guiding the wire bundles 4. A rotary guide 26 has nozzles 26a for guiding the wire bundle 4. The plurality of wire bundles 4 are pulled out of a wire bundle storage (not shown) and guided into the winding head 21. The winding head 21 supplies the wire bundles 4 in parallel to each other.

The operation frame 22 constitutes a position change mechanism and includes a rotation mechanism. The position change mechanism changes the position of the operation frame 22, and has a first motor 27 and a first driven gear 28 driven by the motor 27. The first driven gear 28 is meshed with an arcuate gear 29 formed at an end of the winding head 21. When the first driven gear 28 is rotated forward or backward on the arcuate gear 29 by the first motor 27, the operation frame 22 rotates forward or backward about the pivot shaft 23 to change positions. The rotation mechanism twists the plurality of wire bundles 4, and includes the rotary guide 26. The rotary guide 26 is supported on the operation frame 22, and rotates about a pivot shaft 30. The rotation mechanism also has an outer circumferential gear (not shown) formed around the rotary guide 26, a second motor 31, and a second driven gear 32 that is meshed with the outer circumferential gear of the rotary guide 26 and driven by the motor 31. FIG. 10 is a view of the rotary guide 26 viewed in the direction of arrow C of FIG. 9. The rotary guide 26 directs the wire bundles 4 out of the nozzles 26a toward the stator core 2. In this embodiment, four wire bundles 4 in total are directed out of the nozzles 26a. When the second driven gear 32 is rotated forward or backward on the outer circumferential gear by the second motor 31, the rotary guide 26 rotates forward or backward about the pivot shaft 30, and the wire bundles 4 between the rotary guide 26 and the second guide 25 are thereby twisted. The rotation mechanism including the rotary guide 26 functions as the rotary member of the present invention for twisting the plurality of wire bundles 4 supplied from the winding head 21.

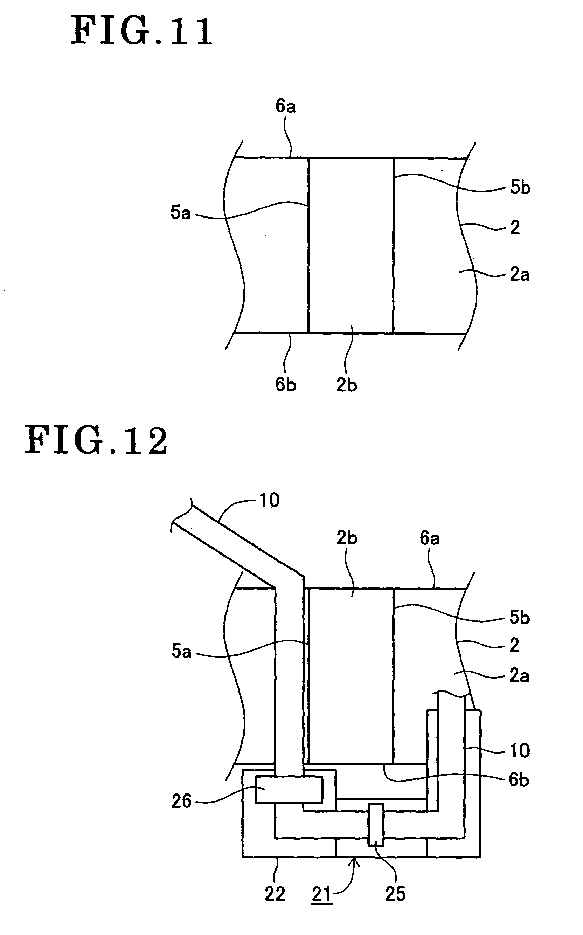

Using the winding head 21, the rotary guide 26 is rotated to twist the wire bundles 4 when the wire bundles 4 are wound on the axial grooves 5a and 5b of the stator core 2, and the rotary guide 26 then rotated in the opposite direction to untwist the wire bundles 4 when the wire bundles 4 are wound around the core ends 6a and 6b of the stator core 2. The individual steps of the method of winding the wire bundles 4 are described with reference to FIGs. 11 to 17.

In a first step, as shown in FIG. 12, the winding head 21 is moved from the upper side to the lower side of the stator core 2 shown in FIG. 11. In this state, the operation frame 22 has been rotated clockwise 90° from the orientation shown in FIG. 9 and the rotary guide 26 is oriented directly upward. Intermediate portions of the plurality of wire bundles 4 (which are hereinafter referred to as "wire bundle group" 10) pulled out of the rotary guide 26 are hooked on an edge of the upper core end part 6a.

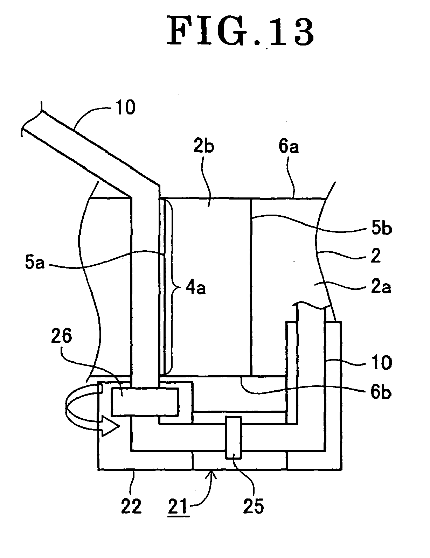

In a second step shown in FIG. 13, the rotary guide 26 is rotated a prescribed number of times in the counterclockwise direction of FIG. 10. In this embodiment, the rotary guide. 26 is rotated the number of times necessary for the axial-groove portions 4a. In this embodiment, the rotary guide 26 is rotated by an integral multiple of 180°. Then, the wire bundles 4 are twisted between the rotary guide 26 and the second guide 25, and twists are imparted to the part of the wire bundle group 10 that corresponds to the axial-groove 5a, that is, a axial-groove portion 4a.

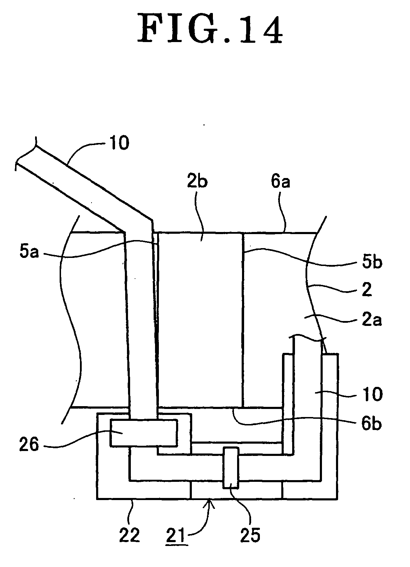

In a third step shown in FIG. 14, the part of the wire bundle group 10 immediately behind the rotary guide 26 is hooked onto an edge of the lower core end part 6b.

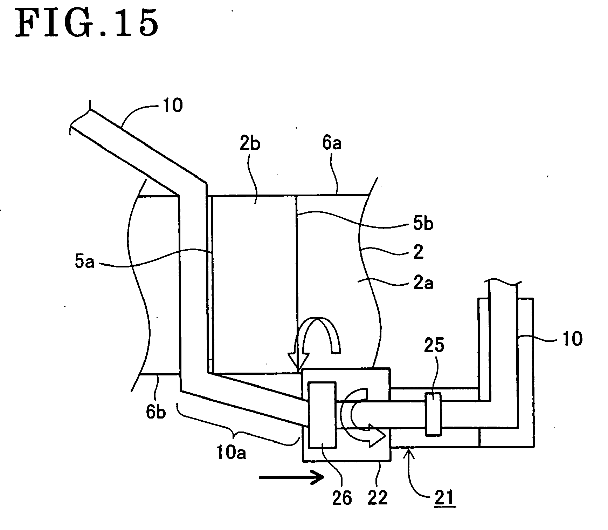

In a fourth step shown in FIG. 15, the winding head 21 is moved horizontally (toward the right in the drawing). Then, the operation frame 22 is rotated counterclockwise 90° from the orientation shown in the third step, and the rotary guide 26 is rotated a prescribed number of times in the clockwise direction of FIG. 10 in the same manner as described before. The wire bundles 4 between the rotary guide 26 and the second guide 25 are thereby untwisted, and the twists of a pulled portion 10a of the wire bundle group 10 immediately behind the rotary guide 26 are straightened. The pulled portion 10a is wound on the core end 6b as a lower coil end portion 4b.

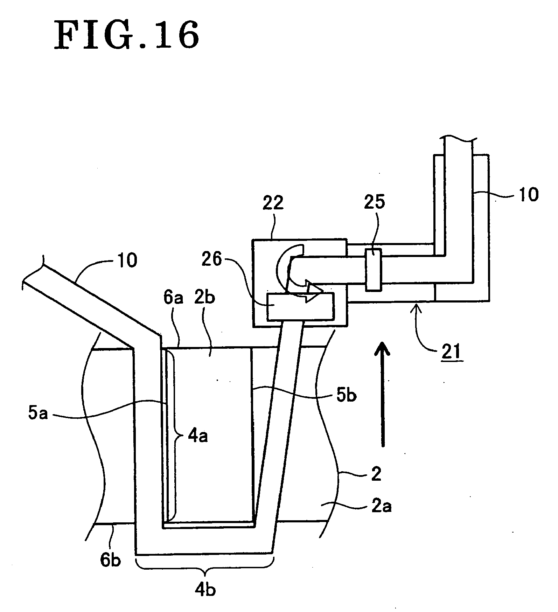

In a fifth step shown in FIG. 16, the operation frame 22 is rotated counterclockwise 90° from the orientation shown in the fourth step, and the winding head 21 is moved upward.

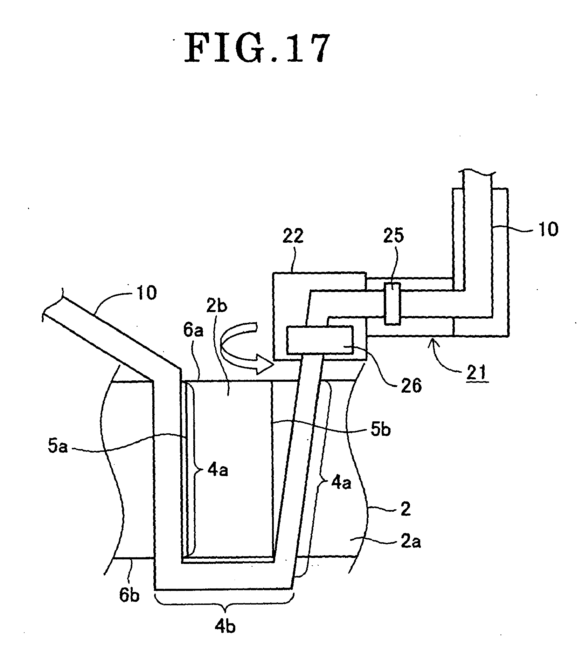

In a sixth step shown in FIG. 17, the rotary guide 26 is rotated a prescribed number of times in the clockwise direction of FIG. 10. Then, the wire bundles 4 are twisted between the rotary guide 26 and the second guide 25, and twists are imparted to the part of the wire bundle group 10 that corresponds to the axial-groove part 5b, that is, an axial-groove portion 4a.

After that, the above first to sixth steps are repeated, whereby the plurality of wire bundles 4 are wound around the stator core 2 so that the twisted-wire portions and straight-wire portions are wound on the axial grooves 5a and 5b and the core ends 6a and 6b, respectively, as shown in FIGs. 2 and 3.

Therefore, in this embodiment, the same effects as those of the coil structure of the first embodiment are achieved. In addition, in this embodiment, when the wire bundles 4 are wound around the stator core 2, the twisted-wire portions are wound on the axial grooves 5a and 5b and the straight-wire bundle portions are wound on the core ends 6a and 6b. That is, twisted-wire portions to be wound on the axial grooves 5a and 5b and straight- wire portions to be wound on the core ends 6a and 6b may be formed during the process of winding the wire bundles 4 around the stator core 2. Therefore, unlike the first embodiment, there is no need to prepare a twisted wire bundle 7 having twisted-wire portions and straight-wire portions to obtain the prescribed coil structure.

A third embodiment embodying a method of forming the coil structure of a motor according to the present invention will be described below with reference to drawings.

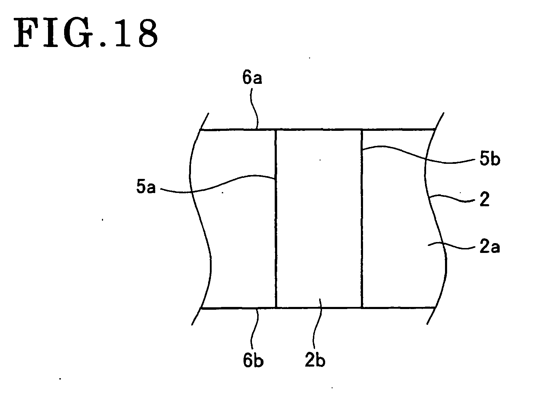

The method of forming the coil structure according to this embodiment is different from that of the second embodiment, although the same coil winder as in the second embodiment is used. This embodiment is drawn to a method of forming the coil structure that is suitable for when the mobility of the winding head 21 in the vicinity of the stator core 2 is restricted due to, for example, the sizes of the stator core 2 and the winding head 21. In this embodiment, when the wire bundles 4 are wound on the axial grooves 5a or 5b using the above winding head 21, the rotary guide 26 rotates the wire bundles 4 m times (m is an integer) the number of rotations necessary to appropriately twist the axial-groove portions 4a at a position at a distance of m-times the length of the axial grooves 5a and 5b from the core ends 6a and 6b. After that, when the wire bundles 4 are wound on the core end part 6a or 6b, the rotary guide 26 applies inverse rotations equal in number to (m-1) times the number of rotations necessary for the straight portions 4a. Each step of the method of winding the wire bundles 4 is individually described with reference to FIGs. 18 to 24.

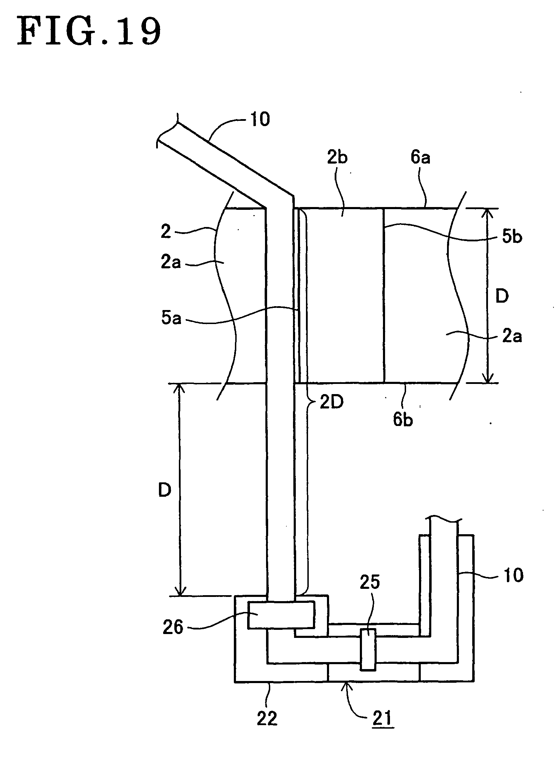

In a first step, as shown in FIG. 19, the winding head 21 is moved from the upper side to the lower side of the stator core 2 shown in FIG. 18. In this embodiment, the winding head 21 is positioned at a distance equal to the slot length D, which is the length of the axial grooves 5a and 5b of the stator core 2, from the lower core end part 6b. This position is at a distance twice the axial groove length D (2D) from the upper core end part 6a, over which the wire bundle group 10 is hooked. In this state, the operation frame 22 has been rotated clockwise 90° from the orientation shown in FIG. 9 and the rotary guide 26 is oriented directly upward. An intermediate portion of the wire bundle group 10 pulled out of the rotary guide 26 is hooked on an edge of the upper core end 6a.

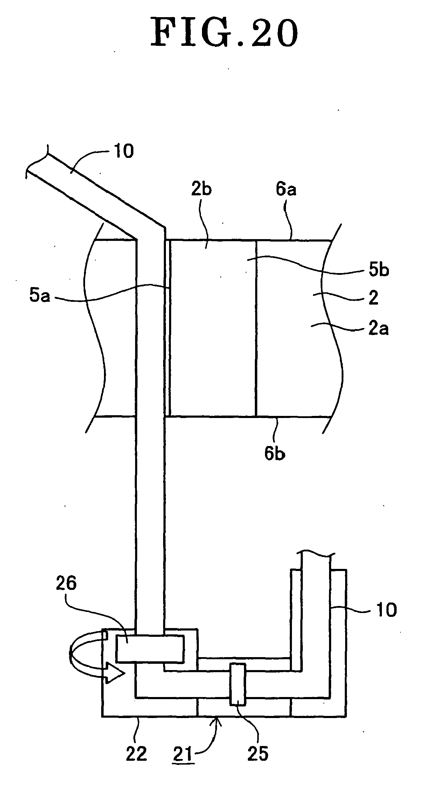

In a second step shown in FIG. 20, the rotary guide 26 is rotated a prescribed number of times in the counterclockwise direction of FIG. 10. The number of rotations is m-times the number of rotations necessary to appropriately twist the axial-groove portions 4a. In this embodiment, an integral multiple of 180° is adopted as the number of rotations necessary to appropriately twist the axial-groove portions 4a. Also, in this embodiment, because the winding head 21 is twice the length of the slot length D (2D) away from the upper core end part 6a, "m" is set equal to 2. When the winding head 21 is three-times the length of the slot length D (3D) away from the upper core end part 6a, "m" is set equal to 3. Then, the wire bundles 4 are twisted between the rotary guide 26 and the second guide 25, and twists are imparted to the part of the wire bundle group 10 corresponding to the axial groove 5a, that is, a axial-groove portion 4a.

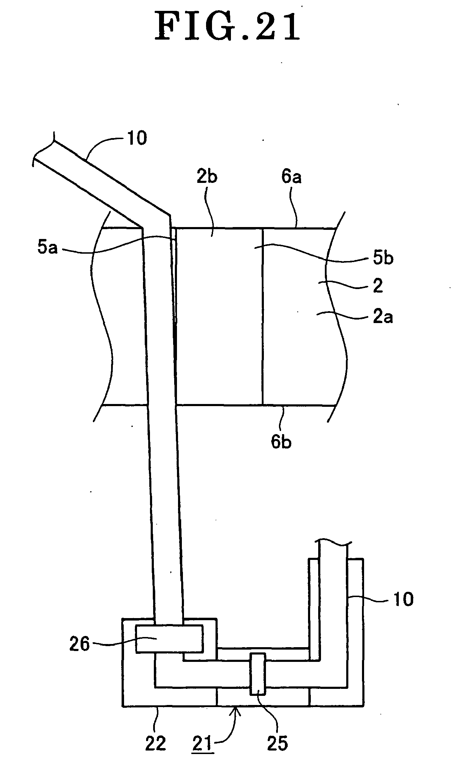

In a third step shown in FIG. 21, a part of the wire bundle group 10 pulled out of the rotary guide 26 is hooked on an edge of the lower core end part 6b.

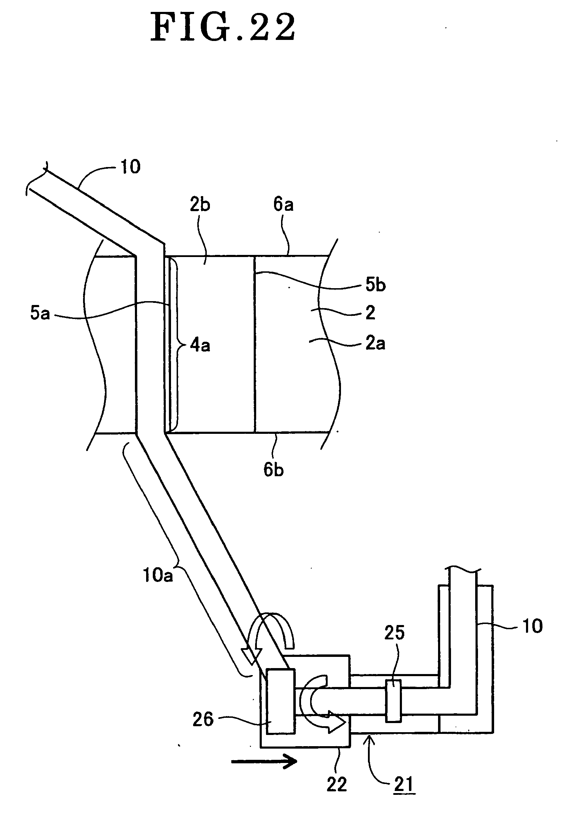

In a fourth step shown in FIG. 22, the winding head 21 is moved horizontally (to the right in the drawing). Then, the operation frame 22 is rotated counterclockwise 90° from the orientation shown in the third step, and the rotary guide 26 is rotated a prescribed number of times in the clockwise direction of FIG. 10. The wire bundles 4 between the rotary guide 26 and the second guide 25 are thereby straight, and the twists of a pulled portion 10a of the wire bundle group 10 immediately behind the rotary guide 26 are straightened again. In this embodiment, the rotary guide 26 rotates in the reverse direction for (m-1) times the number of rotations necessary to twist the straight portions 4a. Thus, when m is set to 2, the (m-1) is equal to 1 and when "m" is set to 3, the (m-1) is equal to 2. The pulled portion 10a is wound on the core end 6b as a lower coil end portion 4b.

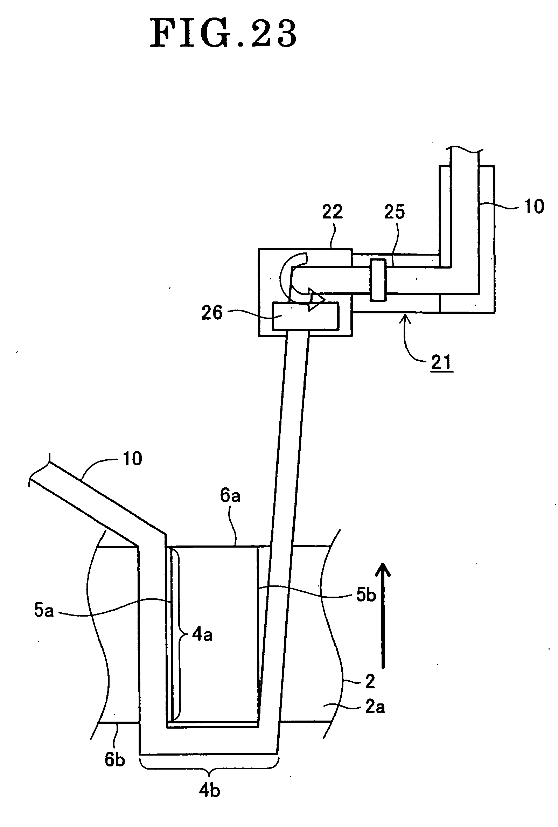

In a fifth step shown in FIG. 23, the operation frame 22 is rotated counterclockwise 90° from the orientation in the fourth step, and the winding head 21 is moved upward. In this embodiment, the winding head 21 is positioned at a distance equal to the axial groove length D of the stator core 2 from the lower core end 6b. This position is at a distance twice the slot length D from the lower core end 6b, over which the wire bundle group 10 is hooked.

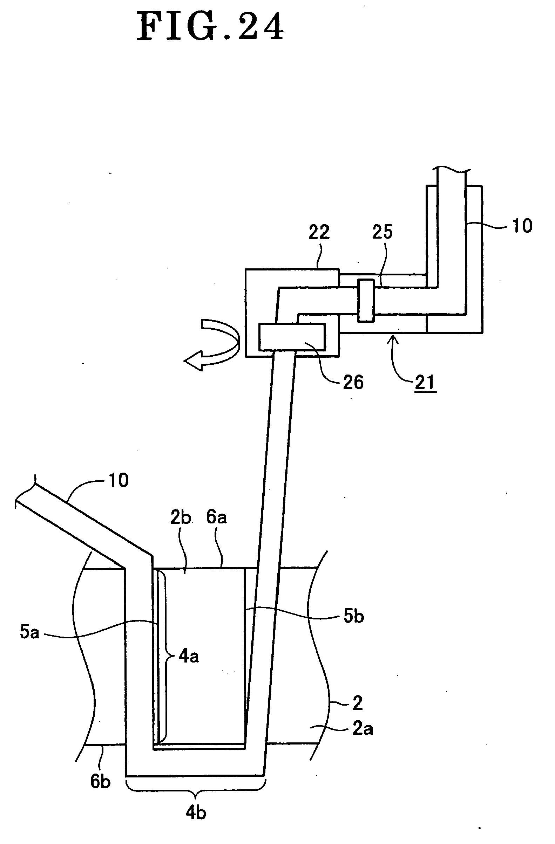

In a sixth step shown in FIG. 24, the rotary guide 26 is rotated a prescribed number of times in the clockwise direction of FIG. 10. Then, the wire bundles 4 are twisted between the rotary guide 26 and the second guide 25, and twists are imparted to the part of the wire bundle group 10 corresponding to the axial groove 5b, that is, an axial-groove portion 4a.

After that, the above-described steps are repeated, whereby the plurality of wire bundles 4 are wound around the stator core 2, and the twisted-wire portions of the wire bundle and straight- wire portions of the wire bundle are wound on the axial groove 5a and 5b and the core ends 6a and 6b, respectively, as shown in FIGs. 2 and 3.

Therefore, in this embodiment, the yield the same effects as those of the coil structure of the first embodiment, and also yields the same effects as those of the forming method of the second embodiment. In addition, in this embodiment, even when the winding head 21 may be moved in the vicinity of the stator core 2, for example, when the inside diameter of the central hole of the stator core 2 is small, the winding head 21 may be used to form the coil structure. In this respect, the efficiency in forming the coil structure in the stator core 2 is improved.

The present invention is not limited to the described embodiments and may be modified as follows without departing the scope of the invention.

Although the wire bundle 4 is described in the above embodiments as being wound around a stator core 2 having an annular shape, the coil structure and the method of forming the coils structure according to the present invention are applicable to the case where a wire bundle is wound around each of the divided cores (bobbins) of a dividable stator core.

(2) In addition, while the coil structure described in the above embodiments is applied to a high-speed motor 120 used in a motor-assisted the turbo charger 110, the present invention is not limited thereto. The coil structure and the method of forming the coil structure of the present invention are applicable to a coil structure of a motor for an electric vehicle.

## Claims

1. A coil structure for a motor having a coil formed by winding a wire bundle composed of a plurality of wires around a core, the coil structure comprising:
the core having axial grooves (5a, 5b) that extend in the axial direction of the motor and core ends (6a, 6b) that extend across the axial direction,
wherein the portions (4a) of the wire bundle which are wound on the axial grooves (5a, 5b) are twisted and the portions (4b) of the wire bundle which are wound on the core end (6a, 6b) are straight.

2. A wire bundle for use in the coil structure of a motor according to claim 1,
the twisted-wire portions (4a) and the straight-wire portions (4b) are alternately formed in advance that correspond in length to the axial-groove (5a, 5b) and the coil end (6a, 6b), respectively.

3. A method of forming a coil structure for a motor having a coil formed by winding a wire bundle composed of a plurality of wires around a core, the core having axial grooves (5a, 5b) that extend in an axial direction of the motor and core ends (6a, 6b) that extend across the axial direction, the method comprising:
bundling a plurality of wires to form a wire bundle (8);
clamping a plurality of portions (4b) of the wire bundle with a plurality of clamps (11), wherein the plurality of clamped portions correspond to the core ends (6a, 6b);
twisting the portions (4a) of the wire bundle that are not clamped by rotating the clamps (11), wherein the portions (4a) that are twisted correspond to the axial grooves (5a, 5b);
applying an adhesive to the twisted portions (4a); and
removing the clamps (11) and winding the resulting wire bundle having alternating twisted-wire portions and straight wire portions around the core (2) of the motor in a plurality of layers.

4. The forming method according to claim 3, wherein
the number of times the clamps (11) are rotated is equal to an integral multiple of 1/2 in the twisting step.

5. A method of forming a coil structure for a motor, **characterized by** comprising:
supplying a wire bundle (4) composed of a plurality of parallel wires to a rotary member (26); and
rotating the rotary member (26) in the forward direction to twist portions (4a) of the wire bundle that are wound on axial grooves (5a, 5b) that are formed on a stator core (2) and that extend in the axial direction of the motor; and
rotating the rotary member (26) in the reverse direction to untwist portions (4b) of the wire bundle that are wound on core ends (6a, 6b) that are formed on the stator core and that extend across the axial direction so that the plurality of wires at the portions (4b) of the wire bundle that are wound on the core end (6a, 6b) are straight.

6. The method of forming a coil structure for a motor according to claim 5, wherein
in the steps of rotating the rotary member in the forward direction and then rotating the rotary member in the reverse direction, the rotary member (26) is rotated in the forward direction m-times the number of rotations necessary to twist portions (4b) of the wire bundle that are wound on the axial grooves (5a, 5b) from a position at a distance of m-times the length (D) of the axial grooves (5a, 5b) from the core end (6a, 6b) when the wire bundle is wound on the axial grooves (5a, 5b), and then the rotary member (26) is rotated in the reverse direction (m-1) times the number of rotations necessary to twist the axial-groove (5a, 5b) when the wire bundle is wound on the core end (6a, 6b).

7. A turbo charger for an internal combustion engine, the turbo charger comprising:
a turbine wheel (111) provided in an exhaust pipe (102) connected to an internal combustion engine;
a compressor wheel (112) provided in the intake pipe (101);
a turbine shaft (113) connecting the turbine wheel (111) and the compressor wheel (112); and
a motor (120) for assisting the rotation of the turbine shaft (113),
wherein the motor (120) includes a coil structure according to claim 1.
